# EUROPEAN PATENT SPECIFICATION

(11) **EP 2 623 267 B1**
(45) Date of publication and mention of the grant of the patent: **05.08.2015**
(21) Application number: 11828557.6
(22) Date of filing: 29.06.2011
(51) Int. Cl.: B25F 5/00, B25B 21/00, B25B 21/02, B25B 5/00

(54) **ELECTRIC TOOL**
ELEKTROWERKZEUG
OUTIL ÉLECTRIQUE

(30) Priority: 29.09.2010 JP 2010218624
(43) Date of publication of application: 07.08.2013
(73) Proprietor: Makita Corporation, Anjo-shi, Aichi 446-8502 (JP)
(72) Inventor: SUZUKI Jiro, Anjo-shi Aichi 446-8502 (JP); WATANABE Masahiro, Anjo-shi Aichi 446-8502 (JP)
(74) Representative: Kramer Barske Schmidtchen Patentanwälte PartG mbB
(86) International application number: PCT/JP2011/064893
(87) International publication number: WO 2012/042996

(56) References cited:
- WO-A1-2008/148375
- JP-A- 1 291 686
- JP-A- 7 075 974
- JP-A- 2004 291 143
- JP-A- 2006 315 125
- US-A- 5 731 673
- US-B1- 6 479 958

## Description

### Technical Field

The present teachings relate to an electric power tool configured to control power supply to a motor based on a pulling amount of a variable speed switch.

### Background Art

WO 2008/148375 A1 discloses a control device for a hand-held power tool. US 5,731,673 A discloses an electrical power tool having a motor control circuit for increasing the effective torque output of the power tool.

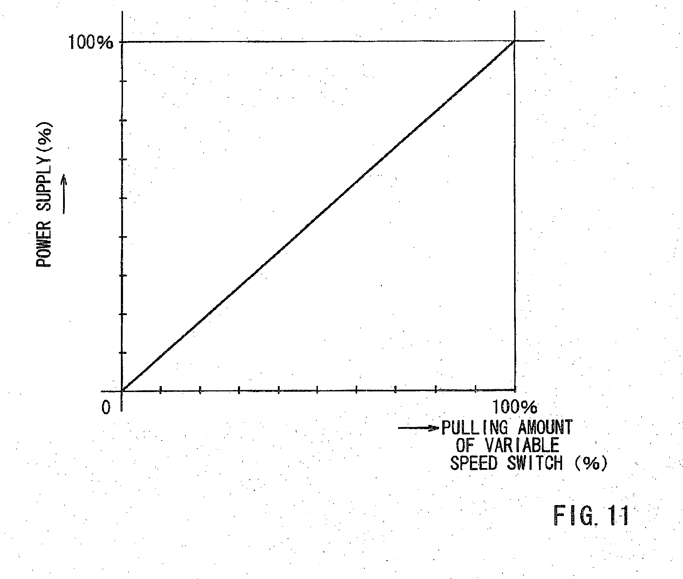

An electric power tool relating to the present teachings is disclosed in JP 2009-50932 A. The electric power tool disclosed in JP 2009-50932 A is a rechargeable impact driver in which a DC motor is used as a power source. The electric power tool is provided with a motor drive circuit that includes a switching element, and is configured to control a voltage that is applied to the DC motor based on a pulling amount of a variable speed switch by use of a pulse-width modulation method (PWM). That is, as shown in FIG. 11, power supply to the DC motor decreases or increases as a function of a pulling amount of the variable speed switch. The variable speed switch is configured to control rotational speed of the DC motor.

### Summary

### Problems to be solved

In a rotatable hitting tool (an electric power tool) such as an impact tool etc., it often happens that the tool has to very often be driven intermittently at the start of fastening a screw in order to adjust a fastening force of the screw.

However, in order to drive the above-described electric power tool intermittently, it is necessary to repeat an ON operation and an OFF operation of a variable speed switch very often. For this reason, the operation of the variable speed switch is troublesome and burdensome for a user.

It is an object to facilitate an operation of a trigger of the electric power tool and to improve usability of the tool.

### Means for solving the Problems

The above problem can be solved by providing an electric power tool according to claim 1.

According to the subject matter of the first part of claim 1, an electric power tool is configured to control power supply to the motor based on an operation amount of a variable speed switch. The electric power tool is configured to perform an intermittent control in which power supply to the motor can be varied intermittently in the same manner as an ON operation and an OFF operation of the variable speed switch are repeated, and also to perform a continuous control in which power supply to the motor can be varied continuously based on an operation amount of the variable speed switch.

Different from PWM, the term intermittent control here means a control in which even when an operation amount of the variable speed switch is fixed, rotational speed increases or decreases in a user's recognizable level.

Accordingly, it is possible that power supply to the motor can be varied intermittently in the intermittent control in the same manner as if an ON operation and an OFF operation of the variable speed switch were being repeated. That is, without repeating an ON operation and an OFF operation, the electric power tool can be driven intermittently in the intermittent control. For this reason, for example, when the electric power tool is driven intermittently at the start of fastening a screw, a trigger operation may not be troublesome, which can improve usability of the electric power tool.

Also, by performing the continuous control, the electric power tool can be used in a similar way to existing tools.

The intermittent control and the continuous control can be switched based on the operation amount of the variable speed switch.

For this reason, for example, it is possible that the intermittent control is performed when the operation amount of the variable speed switch is equal to or a predetermined value, and the continuous control is performed when the operation amount of the variable speed switch is over the predetermined value, which can utilize the intermittent control efficiently and improve usability of the electric power tool.

According to the invention as claimed, the intermittent control and the continuous control can be switched based on a time since starting to perform an ON operation of the variable speed switch.

For this reason, for example, it is possible that the intermittent control is performed during a predetermined time after turning the variable speed switch ON. The continuous control is performed when the predetermined time has passed. The intermittent control can be utilized efficiently and usability of the electric power tool can be improved.

According to claim 2, a ratio of a power-supply time to a power-supply interruption time is constant and power supply per unit time during the power-supply time is varied based on the operation amount of the variable speed switch in the intermittent control.

According to claim 3, a ratio of the power-supply time to the power-supply interruption time is varied based on the operation amount of the variable speed switch, and power supply per unit time during the power-supply time is constant in the intermittent control.

For this reason, when the electric power tool is driven intermittently, rotational speed of the motor can be varied based on the operation amount of the electric power tool.

The intermittent control and the continuous control can be switched based on a load current of the motor or rotational speed of the motor.

A continuous control mode, an intermittent control mode, and a mode switchable between the continuous control and the intermittent control can be selected.

For this reason, usability of the electric power tool can be further improved.

### Effect of the teaching

According to the present teachings, the operation of the trigger will not be troublesome and usability of the electric power tool can be improved.

### Brief Description of Drawings

FIG. 1 is an overall perspective view of an electric power tool.
FIG. 2 is a motor drive circuit diagram of the electric power tool.
FIG. 3 is a pattern diagram showing a relationship between a pulling amount of a variable speed switch of the electric power tool and power supply to a motor.
FIG. 4 is a flowchart showing a behavior of the electric power tool.
FIG. 5 is a graph showing a relationship between the behavior (one example) of the variable speed switch and power supply to the motor.
FIG. 6 is a graph showing a relationship between the behavior (one example) of the variable speed switch and power supply to the motor.
FIG. 7 a flowchart showing a behavior of the electric power tool according to an embodiment of the invention as claimed.
FIG. 8 is a graph showing a relationship between the behavior (one example) of the variable speed switch of the electric power tool according to the embodiment and power supply to the motor.
FIG. 9 is a graph showing a relationship between the behavior (one example) of the variable speed switch of the electric power tool according to a modified embodiment and power supply to the motor.
FIG. 10 a flowchart showing the behavior of the electric power tool according to a modified example.
FIG. 11 is a graph showing a relationship between the behavior of the variable speed switch of an electric power tool according to a prior art example and power supply to the motor.

### Description of Preferred Embodiments

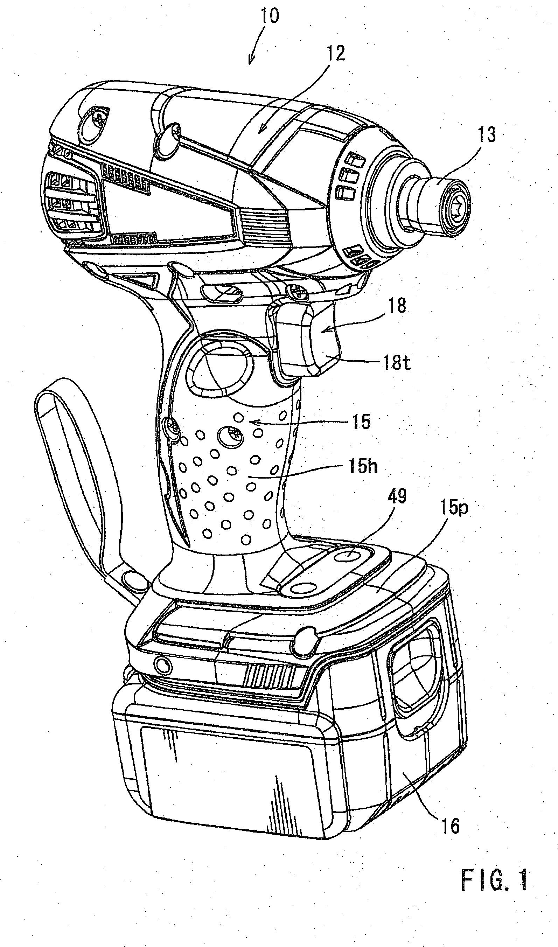

An electric power tool is described hereafter with reference to FIG. 1 to FIG. 10.

### < Outline of Electric Power Tool 10 >

An electric power tool 10 is an impact driver (a rotatable hitting tool) in which a DC brushless motor 20 (hereafter, referred to as the DC motor 20) is used as a power source.

As shown in FIG. 1, the electric power 10 includes a tubular housing main body part 12, and a handle part 15 that is formed to protrude from a lower part of the housing main body part 12. The handle part 15 includes a grip part 15h that a user holds when using the electric power tool 10, and also includes a battery connection part 15p that is located at a lower part (at a tip side) of the grip part 15h. Further, at a base end part of the grip part 15h, there is provided a variable speed switch 18 that a user pulls by his or her finger. At the battery connection part 15p of the handle part 15, there is provided a connection mechanism (not shown) to which a battery pack 16 is connected.

A DC motor 20 is housed at a rear part of the housing main body part 12, and at the front side of the DC motor 20, there is housed a driving device (not shown). It includes a planetary gear train that can increase a rotational force of the DC motor 20 and also a hitting-generation mechanism etc. Further, an output shaft of the driving device is linked to a tool-attaching part 13 that can be attached to a tip end of the housing body part 12.

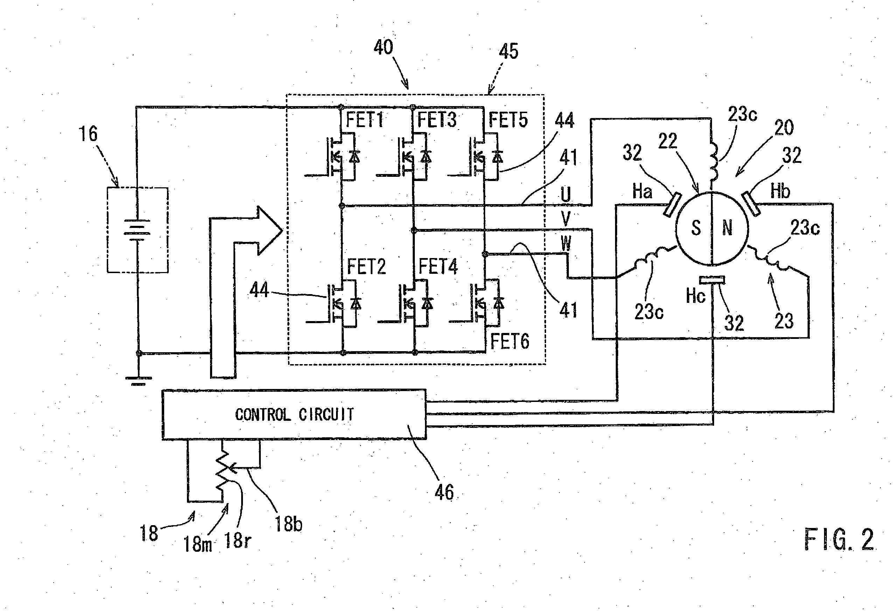

As shown in FIG. 2 etc., the DC motor 20 includes a rotor 22 with a permanent magnet, a stator 23 with drive coils 23c, and three magnetic sensors to detect a position of a magnetic pole of the rotor 22. The magnetic sensors 32 are mounted at intervals of 120 degrees on an electric circuit board (not shown) that is provided at a rear end part of the stator 23, such that the magnetic sensors 32 surround the rotor 22. Further, a three-phase bridge circuit 45 of a motor drive circuit 40 that will be described later are mounted on the electric circuit board.

### < Motor Drive Circuit 40 >

A motor drive circuit 40 is an electric circuit for driving the DC motor 20, and as shown in FIG. 2, the motor drive circuit 40 includes a three-phase bridge circuit 45 that has six switching elements 44 and also includes a control circuit 46 that controls the switching elements 44 of the three-phase bridge circuit based on an electric signal from a variable speed switch 18.

The three-phase bridge circuit 45 is provided with three output lines 41 (U-phase, V-phase, and W-phase), and these output lines 41 are connected to corresponding drive coils 23c (U-phase, V-phase, and W-phase) of the DC motor 20. Further, the three magnetic sensors 32 are positioned in a state in which each sensor is offset 60 degrees with respect to the corresponding drive coils 23c of the DC motor 20.

In addition, field effect transistors (FET) are used for switching elements 44 of the three-phase bridge circuit 45.

### < Variable Speed Switch 18 >

The variable speed switch 18 includes a trigger 18t that a user pulls by his or her finger (refer to FIG. 1) and also includes a switch main body part 18m that is housed inside the handle part 15 of the housing 11.

As shown in FIG. 2, the switch main body part 18m includes a resistor part 18r and a brush part 18b that is configured to slide with respect to the resistor part 18r. And, the switch main body part 18m is configured such that a resistance value between a terminal of the resistor part and a terminal of the brush part 18b increases or decreases by a change in the sliding position of the brush part 18b with respect to the resistor part 18r.

The trigger 18t is configured to maintain an original position (a protrusion position) by a spring force, and also to move to an operating end position by being pulled against the spring force. For this reason, when the trigger 18t is released by a finger, the trigger 18t returns to the original position by the spring force.

The trigger 18t is linked to the brush part 18b of the switch main body part 18m. For this reason, when the trigger 18t is pulled, the brush part 18b of the switch main body part 18m slides with respect to the resistor 18r, which can change a resistance value.

That is, a pulling amount of the trigger 18t will be a function of a resistance value. Further, a state in which the trigger 18t is pulled corresponds to an ON operation state of the variable speed switch and a state in which the trigger 18t returns to the original position by the spring force corresponds to an OFF operation state of the variable speed switch.

As shown in FIG. 2, the switch main body part 18m of the variable speed switch 18 is connected to a control circuit 46, and a resistance value of the variable speed switch 18 is converted to a voltage signal in the control circuit 46.

### < Control Circuit 46 >

The control circuit 46, which includes electric components such as a microprocessor and ICs etc., controls switching elements 44 of the three-phase circuit 45 based on a voltage signal (a pulling amount of the trigger 18t) of the variable speed switch 18.

The control circuit 46 is configured such that when a pulling amount of the trigger 18t of the variable speed switch 18 (hereafter, referred to as a pulling amount of the trigger 18t) is equal to or under L % (for example, equal to or over 30 %), the control circuit 46 drives the DC motor intermittently, and when a pulling amount of the trigger 18t is over L %, the control circuit 46 drives the DC motor continuously.

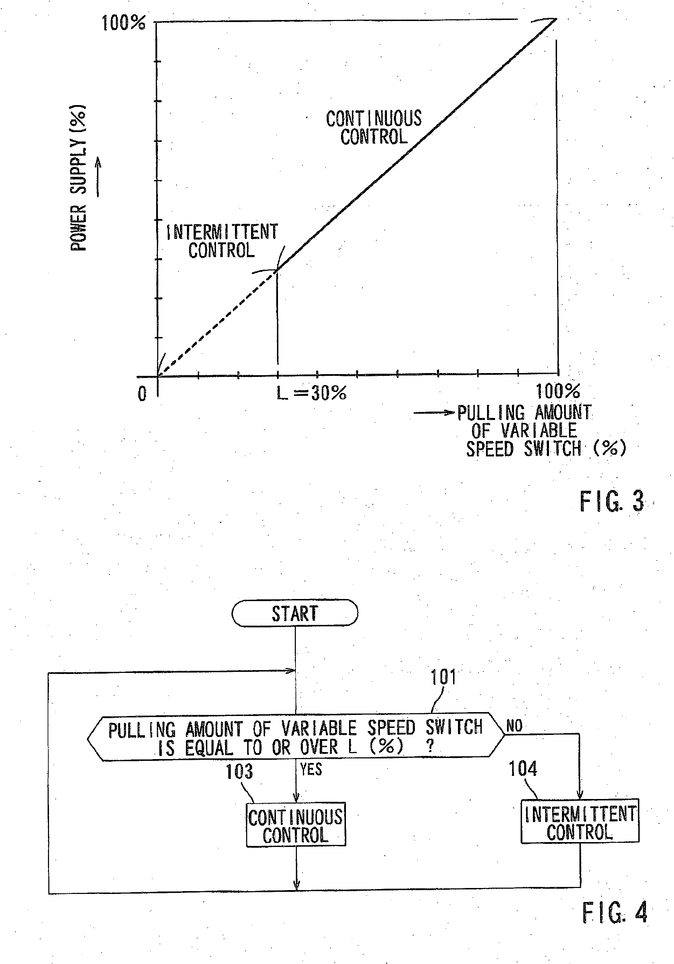

In the continuous control mode, power supply to the DC motor 20 increases as a pulling amount of the variable speed switch 18 increases, and power supply to the DC motor 20 decreases as a pulling amount of the variable speed switch 18 decreases, as shown in a solid line part in FIG. 3. Power supply is adjusted by PWM. Specifically, the switching elements 44 (FET) of the three-phase bridge circuit is driven by controlling a duty cycle by use of a predetermined carrier frequency, and power supplied to each drive coil 23c can be controlled by PWM. In this way, as shown in FIG. 3, power supply to the DC motor 20 increases or decreases based on a pulling amount of the variable speed switch 18, and rotational speed of the DC motor increases of decreases.

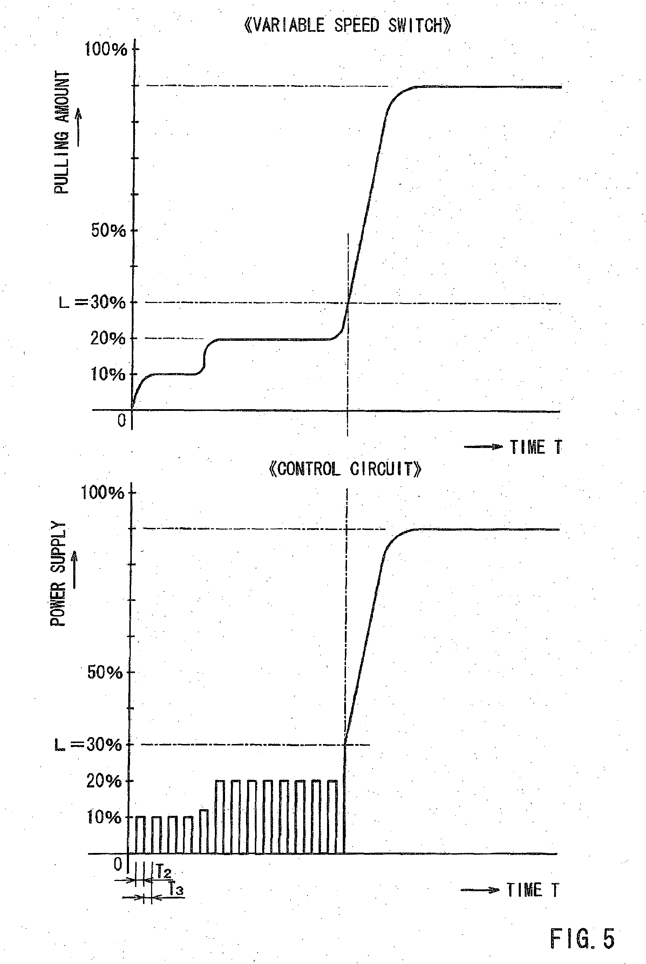

In the intermittent control mode, power supply to the DC motor is controlled in the same manner as an ON operation and an OFF operation of the variable speed switch 18 are repeated. That is, in the intermittent mode, as shown in the left below of FIG. 5 etc., power supply and power supply interruption to the DC motor are repeated periodically. In this embodiment, a time T2 during the power supply and a time T3 during the power supply interruption are set to be equal (for example, T2=T3=0.1 seconds). In this way, rotation and interruption of rotation are repeated every 0.1 seconds.

Power supply per unit time during the power-supply time T2 can be varied based on a pulling amount of the variable speed switch 18. That is, power supply can be adjusted by PWM based on a pulling amount of the variable speed switch 18. For example, as shown in FIG. 5, when a pulling amount of the variable speed switch 18 is about 10 %, power supply per unit time is set to be about 10 % of the maximum power supply. When a pulling amount of the variable speed switch 18 is about 20 %, power supply per unit time is set to be about 20 % of the maximum power supply.

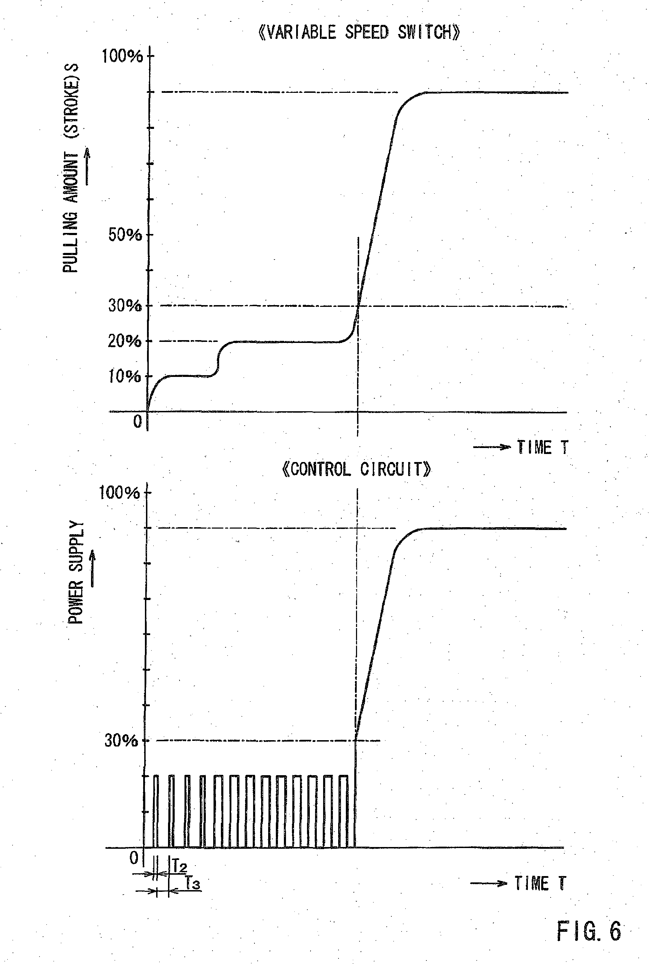

In addition, in the intermittent control mode, it is also possible that power supply per unit time while power is supplied to the DC motor 20 can be set constant and that a ratio of power-supply time T2 to power-supply interruption time T3 can be variable based on a pulling amount of the variable speed switch, as shown in the left below of FIG. 6.

### < Behavior of Electric Power Tool 10 >

Behavior of the above-described electric power tool is described hereafter with reference to FIG. 4 and FIG. 5.

The electric power tool 10 is configured such that when a pulling amount of the variable speed switch 18 is equal to or under L % (for example, 30 %), the DC motor 20 is driven intermittently, and when a pulling amount of the variable speed switch 18 is over L %, the DC motor 20 is driven continuously.

For example, when a pulling amount of the variable speed switch 18 of the electric tool 10 is about 10 %, an intermittent control is performed according to STEP 101 in which a judgment is NO (STEP 104 in FIG. 4). For this reason, as shown in the left below of FIG. 5, power supply and power supply interruption to the DC motor 20 are repeated periodically. As described above, power-supply time T2 and power-supply interruption time T3 is set to be equal (for example, T2=T3=0.1 seconds), and thus the DC motor is driven and stopped repeatedly every 0.1 seconds. Power supply per unit time during the power-supply time T2 is set based on a pulling amount of the variable speed switch 18. For this reason, for example, when a pulling amount of the variable speed switch 18 is about 10 %, power supply per unit time is set to be about 10 % of the maximum power supply, and the DC motor 20 rotates at relatively low speed.

Even when a pulling amount of the variable speed switch 18 increases to about 20 % (FIG. 4, STEP 101, NO), the intermittent control continues (STEP 104). However, since a pulling amount of the variable speed switch 18 has increased (10%→20%), power supply per unit time increases to about 20 % of the maximum power supply, and therefore rotational speed of the DC motor increases.

Further, when a pulling amount of the variable speed switch 18 is over L % (= 30 %) (FIG. 4, STEP 101, YES), a continuous control is performed (STEP 103). For this reason, as shown in the right below in FIG. 5, as a pulling amount of the trigger 18t increases, power supply to the DC motor 20 increases, and therefore rotational speed of the DC motor 20 increases. And, as a pulling amount of the trigger 18t decreases, power supply to the DC motor 20 decreases, and rotational speed of the DC motor 20 decreases.

### < Advantage of Electric Power Tool 10 of the Present Embodiment >

According to the electric power tool 10 of the present embodiment, when intermittent control is performed, power supply to the DC motor can be varied intermittently in the same manner as if an ON operation and an OFF operation of the variable speed switch 18 were performed repeatedly. That is, the electric power tool 10 can be driven intermittently in the intermittent control without an ON operation and an OFF operation of the variable speed switch 18 being performed repeatedly. For this reason, for example, a trigger operation to drive the electric power tool intermittently will not be troublesome at the start of fastening a screw, and thus usability of the electric power tool improves.

Further, by switching to the continuous control mode, the electric power tool can be used in a similar way to existing tools.

Further, the intermittent control mode and the continuous control mode can be switched based on a pulling amount of the variable speed switch 18, and thus the intermittent control can be utilized efficiently and usability of the electric power tool 10 improves.

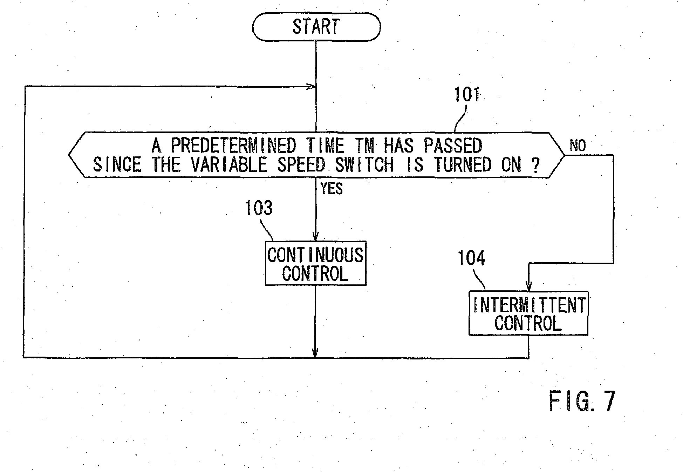

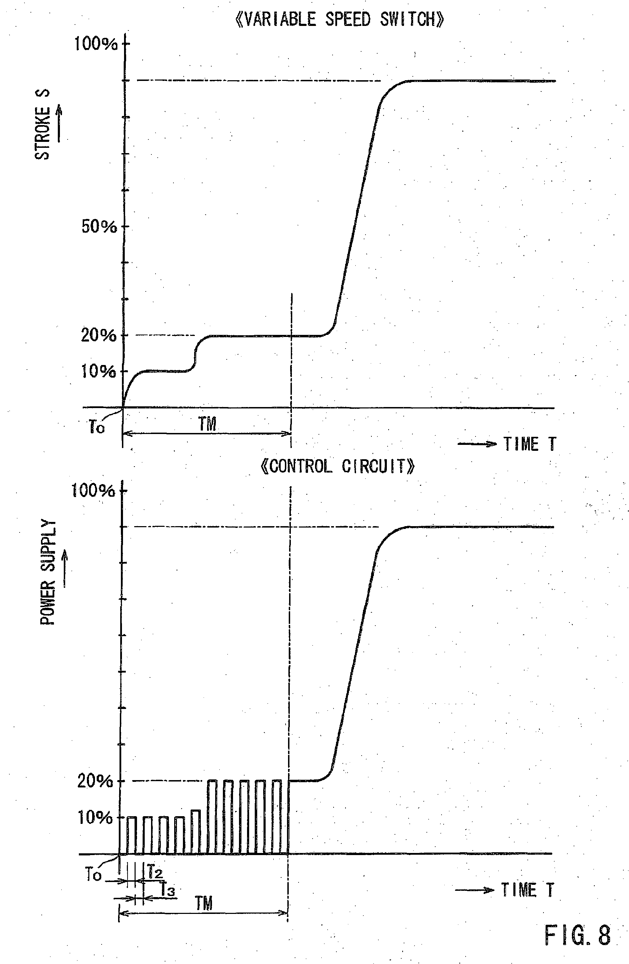

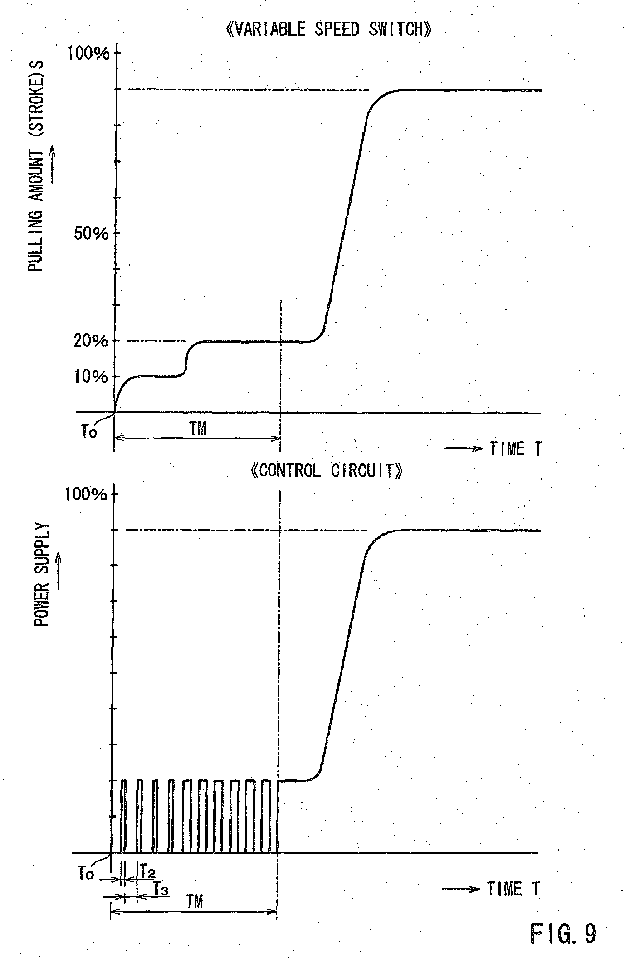

Above, the intermittent control mode and the continuous control mode are switched based on a pulling amount of the variable speed switch 18. However, for example as shown in FIG. 7 to FIG. 9 representing embodiments of the invention as claimed, it is possible that, regardless of a pulling amount of the variable speed switch 18, the intermittent control is performed during a predetermined time TM since an ON operation of the variable speed switch 18 is made at a timing T0, and the continuous control is performed after a predetermined time TM has passed. In the intermittent control mode, as shown in FIG. 8, it is possible that a ratio of the power-supply time T2 to the power-supply interruption time T3 is constant, and the power supply per unit time during power-supply time T2 can be varied based on a pulling amount of variable speed switch 18. Further, as shown in FIG. 9, it is also possible that power supply per unit time during the power-supply time T2 is constant, and a ratio of the power-supply time T2 to the power-supply interruption time T3 is varied based on a pulling amount of the variable speed switch 18.

Further, it is also possible that regardless of a pulling amount of the variable speed switch 18, the electric power tool is configured such that the intermittent control and the continuous control can be switched based on a load current or a rotational speed of the DC motor 20.

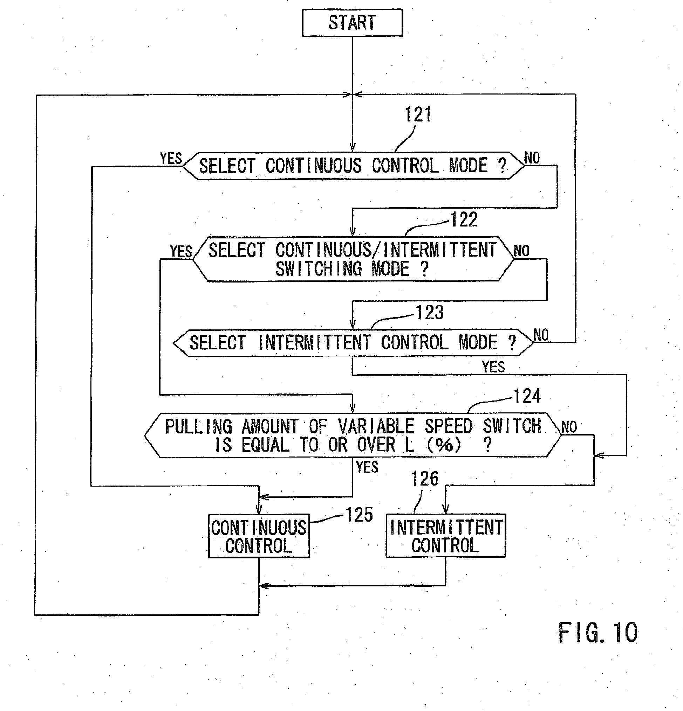

In the present embodiment, there is shown the electric power tool configured such that the intermittent control mode and the continuous control mode can be switched automatically based upon predetermined conditions. However, as shown in FIG. 10, it is possible that a continuous control mode, a continuous/intermittent switch mode, and an intermittent control mode can be selected by use of a mode select switch 49 (refer to FIG. 1).

For example, in the electric power tool shown in FIG. 10, when a continuous control mode is selected by use of the mode select switch 49 (STEP 121, YES), the continuous control is performed at all times (STEP 125). That is, power supply to the DC motor 20 increases or decreases based on a pulling amount of the variable speed switch 18, and rotational speed of the DC motor 20 increases or decreases.

Further, when an intermittent control mode is selected by use of the mode select switch 49 (STEP 123, YES), the intermittent control mode is performed at all times (STEP 126). That is, power supply and power supply interruption to the DC motor 20 are repeated periodically, and the DC motor 20 drives and stops at a predetermined interval.

Further, when a continuous/intermittent switch mode is selected by use of the mode select switch 49, for example, the intermittent control and the continuous control can be switched based on a pulling amount of the variable speed switch 18 (STEP 124~STEP126).

Further, in the present embodiment, the examples show that based on a pulling amount of the variable speed switch, power supply to the DC motor 20 is varied or the intermittent control and the continuous control are switched. However, it is also possible, for example, that based on a pressing force (operational amount) by use of a variable speed switch configured such that a resistance value varies by the pressing force, power supply to the DC motor 20 is varied, or the intermittent control and the continuous control can be switched.

### Explanation of symbols

- 10: electric power tool
- 18: variable speed switch
- 18t: trigger
- 20: DC motor (motor)
- 44: switching element
- 46: control circuit
- T2: power-supply time
- T3: power-supply interruption time
- TM: predetermined time

## Claims

1. An electric power tool (10) configured to control a power supply to a motor (20) based on an operational amount of a variable speed switch (18), the electrical power tool also being configured to perform an intermittent control and a continuous control, wherein:
in an intermittent control mode, a power supply to the motor (20) can be varied intermittently in the same manner as if the variable speed switch (18) was repeatedly changed between an ON operation and an OFF operation;
in a continuous control mode, power supply to the motor (20) can be varied continuously based on an operational amount of the variable speed switch (18); and
the intermittent control mode can be switched to the continuous control mode based on a pre-determined time (TM) from when the variable speed switch (18) performs an ON operation.

2. The electric power tool according to claim 1, wherein in the intermittent control, a ratio of a power-supply time (T2) to a power-supply interruption time (T3) is constant, and power supply per unit time during the power-supply time (T2) is varied based on the operational amount of the variable speed switch (18).

3. The electric power tool according to claim 1, wherein in the intermittent control, a ratio of the power-supply time (T2) to the power-supply interruption time (T3) is varied based on the operational amount of the variable speed switch (18), and power supply per unit time during the power-supply time is constant.

## Patentansprüche

1. Elektrisches Kraftwerkzeug (10), das zum Steuern einer Leistungszufuhr an einen Motor (20) basierend auf einem Betätigungsausmaß eines variablen Drehzahlschalters (18) konfiguriert ist, und das elektrische Kraftwerkzeug ebenso zum Ausführen einer intermittierenden Steuerung und einer kontinuierlichen Steuerung konfiguriert ist, bei dem
in einem intermittierenden Steuerungsmodus eine Leistungszufuhr an den Motor (20) in der gleichen Weise intermittierend variiert werden kann, wies wenn der variable Drehzahlschalter (18) wiederholt zwischen einer AN-Betätigung und einer AUS-Betätigung geschaltet würde,
in einem kontinuierlichen Steuerungsmodus die Leistungszufuhr an den Motor (20) basierend auf einem Betätigungsausmaß des variablen Drehzahlschalters (18) kontinuierlich variiert werden kann, und
der intermittierende Steuerungsmodus in den kontinuierlichen Steuerungsmodus basierend auf einer vorbestimmten Zeit (TM) von dem Zeitpunkt an, wenn der variable Drehzahlschalter (18) eine AN-Betätigung ausführt, geschaltet werden kann.

2. Elektrisches Kraftwerkzeug nach Anspruch 1, bei dem in der intermittierenden Steuerung ein Verhältnis einer Leistungszufuhrzeit (T2) und einer Leistungszufuhrunterbrechungszeit (T3) konstant ist und eine Leistungszufuhr pro Zeiteinheit während der Leistungszufuhrzeit (T2) basierend auf dem Betätigungsausmaß des variablen Drehzahlschalters (18) variiert wird.

3. Elektrisches Kraftwerkzeug nach Anspruch 1, bei dem in der intermittierenden Steuerung ein Verhältnis von der Leistungszufuhrzeit (T2) zu der Leistungszufuhrunterbrechungszeit (T3) basierend auf dem Betätigungsausmaß des variablen Drehzahlschalters (18) variiert wird und die Leistungszufuhr pro Zeiteinheit während der Leistungszufuhrzeit konstant ist.

## Revendications

1. Outil (10) électrique configuré pour contrôler une alimentation en énergie d'un moteur (20) selon un degré d'actionnement d'un commutateur (18) de vitesse variable, l'outil électrique étant aussi configuré pour effectuer une commande intermittente et une commande continue, dans lequel :
dans un mode de commande intermittente, une alimentation en énergie du moteur (20) peut être variée de façon intermittente de la même façon que si le commutateur (18) de vitesse variable étant changé de façon répétitive entre un fonctionnement allumé et un fonctionnement éteint ;
dans un mode de commande continue, l'alimentation en énergie du moteur (20) peut être variée continuellement selon un degré d'actionnement du commutateur (18) de vitesse variable ; et
le mode de commande intermittente peut être commuté vers le mode de commande continue selon un temps (TM) prédéterminé après que le commutateur (18) de vitesse variable effectue un fonctionnement allumé.

2. Outil électrique selon la revendication 1, dans lequel dans la commande intermittente, un ratio d'un temps (T2) d'alimentation en énergie sur un temps (T3) d'interruption d'alimentation en énergie est constant, et l'alimentation en énergie par unité de temps pendant le temps (T2) d'alimentation en énergie est variée selon le degré d'actionnement du commutateur (18) de vitesse variable.

3. Outil électrique selon la revendication 1, dans lequel dans la commande intermittente, un ratio d'un temps (T2) d'alimentation en énergie sur un temps (T3) d'interruption d'alimentation en énergie est varié selon le degré d'actionnement du commutateur (18) de vitesse variable, et l'alimentation en énergie par unité de temps pendant le temps d'alimentation en énergie est constante.
